# EUROPÄISCHE PATENTSCHRIFT

(11) **EP 1 747 708 B1**
(45) Veröffentlichungstag und Bekanntmachung des Hinweises auf die Patenterteilung: **18.11.2009**
(21) Anmeldenummer: 06013556.3
(22) Anmeldetag: 30.06.2006
(51) Int. Cl.: A01B 59/04

(54) **Vorrichtung zum Anhängen eines Arbeitsgerätes an Unterlenkern eines Traktors**
Device for attaching a working implement to the lower arms of a three-point hitch of a tractor
Dispositif d'attelage pour une machine agricole aux barres inférieures d'un attelage à trois points d'un tracteur

(30) Priorität: 29.07.2005 DE 202005011915 U
(43) Veröffentlichungstag der Anmeldung: 31.01.2007
(73) Patentinhaber: Südharzer Maschinenbau GmbH, 99734 Nordhausen (DE)
(72) Erfinder: Kernstock, Johann, 91522 Ansbach (DE)
(74) Vertreter: Witzany, Manfred

(56) Entgegenhaltungen:
- DE-U- 1 913 875
- FR-A- 1 420 776
- FR-A1- 2 671 450
- FR-A1- 2 740 649
- US-A- 5 620 054

## Beschreibung

Die Erfindung betrifft eine Vorrichtung zum Anhängen eines Arbeitsgerätes an Unterlenkern eines Traktors gemäß dem Oberbegriff des Patentanspruchs 1.

Aus der US-A-5 620 054 ist eine gattungsgemäße Vorrichtung zum Anhängen eines Arbeitsgerätes an Unterlenkern eines Traktors bekannt. Diese Vorrichtung weist Bolzen auf, die mit den Unterlenkern verbindbar sind. An diesen Bolzen ist über Exzenter ein Arbeitsgerät verstellbar gehalten. Dieses Arbeitsgerät weist eine Quertraverse auf, die die Bolzen in einem definierten Abstand hält. Diese Vorrichtung hat sich in der Praxis bewährt und bildet den Ausgangspunkt der vorliegenden Erfindung.

Der Erfindung liegt die Aufgabe zugrunde, eine Vorrichtung der eingangs genannten Art zu schaffen, die universeller einsetzbar ist.

Diese Aufgabe wird erfindungsgemäß mit den Merkmalen des Patentanspruchs 1 gelöst.

Die Vorrichtung gemäß Anspruch 1 dient zum Anhängen eines Arbeitsgeräts an Unterlenkern eines Traktors. Insbesondere ist daran gedacht, das Arbeitsgerät an eine Zapfwelle des Traktors anzuschließen, um mechanische Arbeit verrichten zu können. Obwohl unterschiedliche Arbeitsgeräte in Frage kommen, ist insbesondere an einen Holzspalter bzw. eine Holzsäge gedacht. Die Vorrichtung weist eine Quertraverse auf, an der Bolzen gehalten sind, die die Verbindung mit den Unterlenkern herstellen. Zur Erzielung einer universelleren Einsetzbarkeit ist die Quertraverse über einen Exzenter verstellbar an den Unterlenkern gehalten. Auf diese Weise kann die Höhe der Bolzen sowie der Abstand zum Fahrzeugheck eingestellt werden. Die Einstellung kann grundsätzlich stufenlos erfolgen, in der Regel reicht jedoch eine stufige Einstellbarkeit für den gewünschten Anwendungszweck aus. Ist das Arbeitsgerät beispielsweise zu tief abgestellt, so können die Bolzen durch entsprechendes Verstellen des Exzenters derart nach oben verschwenkt werden, daß sie von den Unterlenkern des Traktors erfaßt werden können. Zur Erzielung einer einfachen und gleichzeitig wirkungsvollen Ausbildung des Exzenters sind die Bolzen an Wangen gehalten, an denen Stutzen exzentrisch gehalten sind. Diese Stutzen halten die Quertraverse. Durch Verschwenken der Wangen kann auf diese Weise die gewünschte exzentrische Verstellung der Quertraverse erzielt werden.

Um das Arbeitsgerät an unterschiedlichen Traktoren einstellen zu können, ist es gemäß Anspruch 2 vorteilhaft, wenn die Quertraverse teleskopierbar ist. Damit kann die Quertraverse in ihrer Länge dem Abstand der Unterlenker angepaßt werden.

Zur Erzielung eines stabilen Aufbaus der Vorrichtung ist es gemäß Anspruch 3 günstig, wenn die Stutzen und die Quertraverse ineinandergreifend ausgebildet sind. Zugkräfte werden dabei besonders günstig über die Quertraverse und die Stutzen in die Unterlenker eingebracht. Außerdem kann auf diese Weise sehr einfach eine Teleskopierbarkeit der Quertraverse erzielt werden, indem die Stutzen mehr oder weniger tief in die Quertraverse eingeschoben werden.

Eine bevorzugte Weiterbildung der Vorrichtung ergibt sich aus Anspruch 4. Dabei greifen die Stutzen in die rohrförmig ausgebildete Quertraverse ein. Die Quertraverse selbst ist dabei über ihre gesamte Breite nutzbar, so daß das Arbeitsgerät sehr leicht an der Quertraverse befestigt werden kann. Vorzugsweise sind die Stutzen zur Einsparung von Material ebenfalls rohrförmig ausgebildet.

Zur einfachen Fixierung der Quertraverse ist es gemäß Anspruch 5 vorteilhaft, wenn die Stutzen und die Quertraverse Bohrungen aufweisen, in die Steckbolzen zur Fixierung der Quertraverse einsteckbar sind. Auf diese Weise ergibt sich eine einfache, stufige Verstellbarkeit, die für den gewünschten Anwendungsfall vollkommen ausreichend ist. Die Steckbolzen sind dabei ausschließlich auf Scherung belastet, so daß sie hohen Kräften standhalten können.

Die Bohrungen sind gemäß Anspruch 6 über den Umfang bzw. in axialer Richtung verteilt angeordnet, um die gewünschte exzentrische Verstellung bzw. Teleskopierbarkeit der Quertraverse zu ermöglichen. Dabei ist es grundsätzlich ausreichend, wenn bei einem der Teile die Bohrungen über den Umfang und bei dem anderen axial verteilt angeordnet sind.

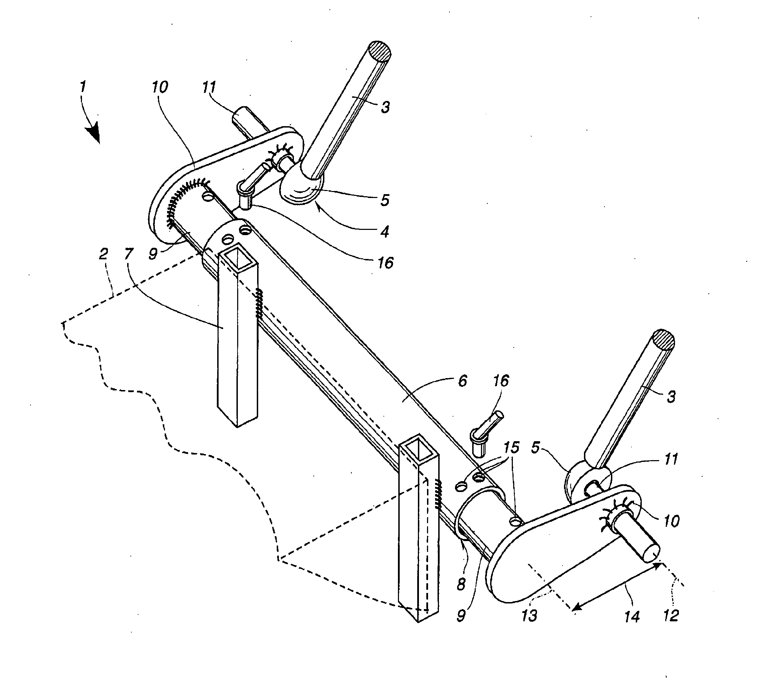

Der Erfindungsgegenstand wird beispielhaft anhand der Zeichnung erläutert, ohne den Schutzumfang zu beschränken.

Die einzige Figur zeigt eine räumliche Darstellung einer Vorrichtung 1 zum Anhängen eines nur strichliert angedeuteten Arbeitsgerätes 2 an Unterlenkern 3 eines nicht dargestellten Traktors. Die Unterlenker 3 sind an ihrem freien Ende 4 mit Kugelköpfen 5 ausgerüstet, die zur gelenkigen Verbindung mit dem Arbeitsgerät 2 dienen.

Die Vorrichtung 1 weist eine rohrförmige Quertraverse 6 auf, an der Träger 7 festgeschweißt sind. Diese Träger 7 dienen zur direkten festen Verbindung der Quertraverse 6 mit dem Arbeitsgerät 2.

In beide Rohrenden 8 der Quertraverse 6 tauchen Stutzen 9 ein, die kraftschlüssig mit der Quertraverse 6 verbunden sind. Die Quertraverse 6 ist jedoch gegenüber den Stutzen 9 verdrehbar gehalten. Die Stutzen 9 sind auf Wangen 10 aufgeschweißt, auf denen außerdem Bolzen 11 vorgesehen sind. Diese Bolzen 11 sind sowohl innen- als auch außenseitig zu den Wangen 10 mit unterschiedlichen Durchmessern vorgesehen, um auf diese Weise eine Anpassung an unterschiedliche Traktoren zu gewährleisten. Die Bolzen 11 dienen zur direkten Verbindung mit den Kugelköpfen 5 der Unterlenker 3. Die Bolzen 11 besitzen eine Bolzenachse 12, die von einer Stutzenachse 13 um eine Distanz 14 entfernt sind. Aufgrund dieser exzentrischen Anordnung der Achsen 12, 13 läßt sich der Stutzen 9 und damit die Quertraverse 6 um die Bolzenachse 12 verschwenken. Auf diese Weise kann eine Anpassung der relativen Lage zwischen dem Bolzen 11 und der Quertraverse 6 erfolgen.

Um während des Betriebs des Arbeitsgerätes 2 eine feste Verbindung mit dem Traktor sicherzustellen, sind in der Quertraverse 6 und im Stutzen 9 Bohrungen 15 vorgesehen. Die Bohrungen 15 in der Quertraverse 6 sind dabei über den Umfang der Quertraverse 6 verteilt. Die Bohrungen 15 im Stutzen 9 sind dagegen in axialer Richtung verteilt. Auf diese Weise ist es möglich, die Bohrungen 15 der Quertraverse 6 und des Stutzens 9 in unterschiedlichen Drehwinkeln und axialen Lagen jeweils zur Deckung zu bringen. In den Deckungslagen kann ein Steckbolzen 16 die Verbindung zwischen der Quertraverse 6 und dem Stutzen 9 sichern. Eine weitere Bewegung beider Teile gegeneinander ist dann ausgeschlossen.

### Bezugszeichenliste

- 1: Vorrichtung
- 2: Arbeitsgerät
- 3: Unterlenker
- 4: freies Ende
- 5: Kugelkopf
- 6: Quertraverse
- 7: Träger
- 8: Ende
- 9: Stutzen
- 10: Wange
- 11: Bolzen
- 12: Bolzenachse
- 13: Stutzenachse
- 14: Distanz
- 15: Bohrung
- 16: Steckbolzen

## Patentansprüche

1. Vorrichtung zum Anhängen eines Arbeitsgerätes (2) an Unterlenkern (3) eines Traktors, wobei die Vorrichtung (1) mindestens zwei an Wangen (10) gehaltene, mit den Unterlenkern (3) verbindbare Bolzen (11) aufweist, und das Arbeitsgerät (2) über mindestens einen Exzenter verstellbar an den Unterlenkern (3) gehalten ist, **dadurch gekennzeichnet, daß** an den Wangen (10) Stutzen (9) exzentrisch gehalten sind, die eine das Arbeitsgerät (2) tragende Quertraverse (6) halten.

2. Vorrichtung nach Anspruch 1, **dadurch gekennzeichnet, daß** die Quertraverse (6) teleskopierbar ist.

3. Vorrichtung nach Anspruch 1 oder 2, **dadurch gekennzeichnet, daß** die Stutzen (9) und die Quertraverse (6) ineinandergreifend ausgebildet sind.

4. Vorrichtung nach Anspruch 3, **dadurch gekennzeichnet, daß** die Stutzen (9) in die rohrförmig ausgebildete Quertraverse (6) eingreifen.

5. Vorrichtung nach Anspruch 3 oder 4, **dadurch gekennzeichnet, daß** die Stutzen (9) und die Quertraverse (6) Bohrungen (15) aufweisen, in die Steckbolzen (16) zur Fixierung der Quertraverse (6) einsteckbar sind.

6. Vorrichtung nach Anspruch 5, **dadurch gekennzeichnet, daß** die Bohrungen (15) über den Umfang und/oder in axialer Richtung verteilt angeordnet sind.

## Claims

1. Device for attaching a working implement (2) to lower arms (3) of a tractor, wherein the device (1) has at least two pins (11) which are held on cheeks (10) and can be connected to the lower arms (3), and the working implement (2) is held adjustably on the lower arms (3) via at least one eccentric, **characterized in that** supports (9) are held eccentrically on the cheeks (10), said supports holding a crosspiece (6) which carries the working implement (2).

2. Device according to Claim 1, **characterized in that** the crosspiece (6) is telescopic.

3. Device according to Claim 1 or 2, **characterized in that** the supports (9) and the crosspiece (6) are designed such that they intermesh.

4. Device according to Claim 3, **characterized in that** the supports (9) engage in the crosspiece (6) which is of tubular design.

5. Device according to Claim 3 or 4, **characterized in that** the supports (9) and the crosspiece (6) have holes (15) into which plug-in pins (16) can be inserted in order to fix the crosspiece (6).

6. Device according to Claim 5, **characterized in that** the holes (15) are distributed over the circumference and/or in the axial direction.

## Revendications

1. Dispositif d'attelage pour un engin de travail (2) aux barres inférieures (3) d'un tracteur, le dispositif (1) présentant au moins deux boulons (11) fixés sur des parois (10), pouvant être connectés aux barres inférieures (3), et l'engin de travail (2) étant maintenu de manière déplaçable sur les barres inférieures (3) par le biais d'au moins un excentrique, **caractérisé en ce que** des supports (9) sont maintenus de manière excentrée sur les parois (10), et retiennent une traverse (6) portant l'engin de travail (2).

2. Dispositif selon la revendication 1, **caractérisé en ce que** la traverse (6) peut être télescopée.

3. Dispositif selon la revendication 1 ou 2,
**caractérisé en ce que** les supports (9) et la traverse (6) sont réalisés de manière à s'engager les uns dans les autres.

4. Dispositif selon la revendication 3, **caractérisé en ce que** les supports (9) s'engagent dans la traverse (6) réalisée sous forme tubulaire.

5. Dispositif selon la revendication 3 ou 4,
**caractérisé en ce que** les supports (9) et la traverse (6) présentent des alésages (15) dans lesquels peuvent être enfoncés des boulons d'enfichage (16) pour fixer la traverse (6).

6. Dispositif selon la revendication 5, **caractérisé en ce que** les alésages (15) sont disposés de manière répartie sur la périphérie et/ou dans la direction axiale.
